Europäisches Patentamt

European Patent Office

Office européen des brevets

(11) Publication number: **0 068 685**
A1

# (12) EUROPEAN PATENT APPLICATION

(21) Application number: 82303016.8

(22) Date of filing: 11.06.82

(51) Int. Cl.³: **B 23 Q 7/04,** B 23 Q 7/14

(30) Priority: 30.06.81 JP 100503/81

(43) Date of publication of application: 05.01.83
Bulletin 83/1

(84) Designated Contracting States: DE FR GB IT

(71) Applicant: Fanuc Ltd, 5-1, Asahigaoka, 3-chome,
Hino-shi, Tokyo 191 (JP)

(72) Inventor: Inaba, Hajimu, 5-3-16, Asahigaoka, Hino-shi
Tokyo (JP)
Inventor: Torii, Nobutoshi, Fuyo Haitsu 308 65-4,
Takakura-cho, Hachioji-shi Tokyo (JP)

(74) Representative: Allman, Peter John et al, Marks and
Clerk Scottish Life House Bridge Street, Manchester
M3 3DP (GB)

(54) A workpiece loading apparatus for an industrial robot.

(57) In industrial robots utilized for machine tools, the height position of workpiece grippers is adjusted by a combination of four motions of the workpiece grippers of the robots, i.e., vertical linear motion along the vertical axis, transverse linear motion along the horizontal axis, vertical rotation around the horizontal axis, and horizontal rotation around the vertical axis. However, workpiece grippers of some robots are not able to effect vertical linear motion along the vertical axis.

According to the present invention, the entire workpiece loading apparatus may manually be adjusted to any desired height. Therefore, gripping of the workpiece by the gripper of said robot at any desired height position can easily be obtained.

A WORKPIECE LOADING APPARATUS

FOR AN INDUSTRIAL ROBOT

BACKGROUND OF THE INVENTION

The present invention relates to a supplying apparatus, more particularly, to a workpiece loading apparatus for loading a workpiece (or rough material to be machined) into a workpiece gripping region of an industrial robot.

In industrial robots utilized for machine tools or the like, the height position of the workpiece gripper is adjusted by a combination of four motions of the workpiece gripper of the robots, i.e., vertical linear motion along the vertical axis, transverse linear motion along the horizontal axis, vertical rotation around the horizontal axis, and horizontal rotation around the vertical axis. However, the workpiece grippers of some robots cannot effect vertical linear motion along the vertical axis due to simpler robot construction.

The present invention relates to an apparatus for loading workpieces into the workpiece grippers of robots not able to effect vertical linear motion along the vertical axis.

OBJECTS OF THE INVENTION

Accordingly, it is a primary object of the present invention to provide a workpiece loading apparatus which can load a workpiece into a workpiece gripper of a robot positioned at a fixed height.

It is an another object of the invention to provide an above said workpiece loading apparatus which is simple in construction and low in manufacturing cost.

BRIEF DESCRIPTION OF THE DRAWINGS

The present invention will now be described in detail with reference to the following drawings, which illustrate specific embodiments, in which:

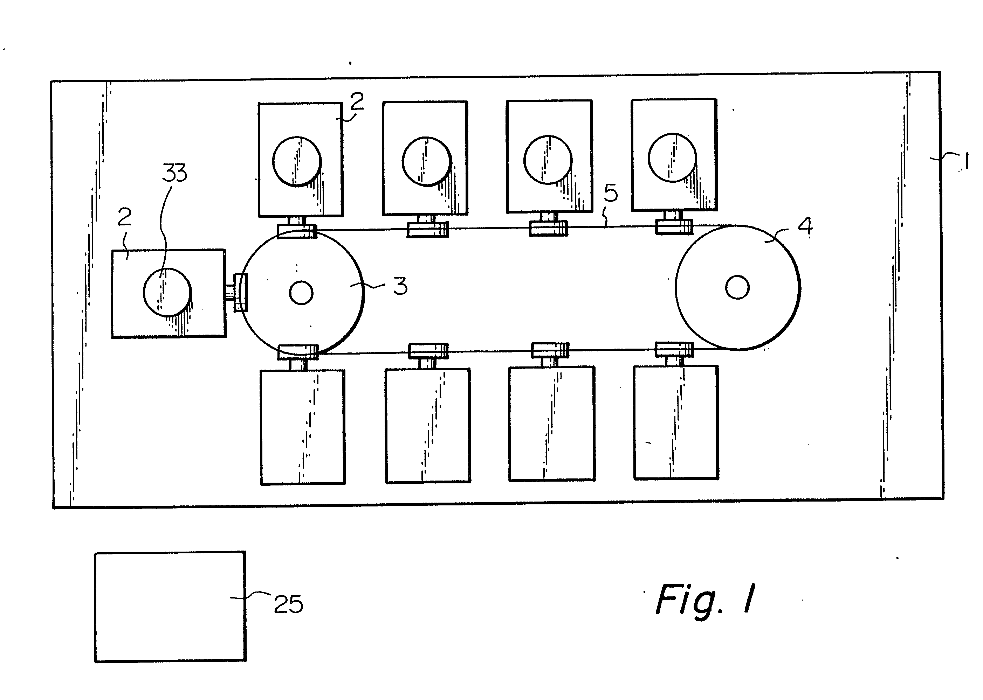

Fig. 1 is a general plan view illustrating one embodiment of a workpiece loading apparatus for an industrial robot according to the present invention;

Fig. 2 is a side view of Fig. 1;

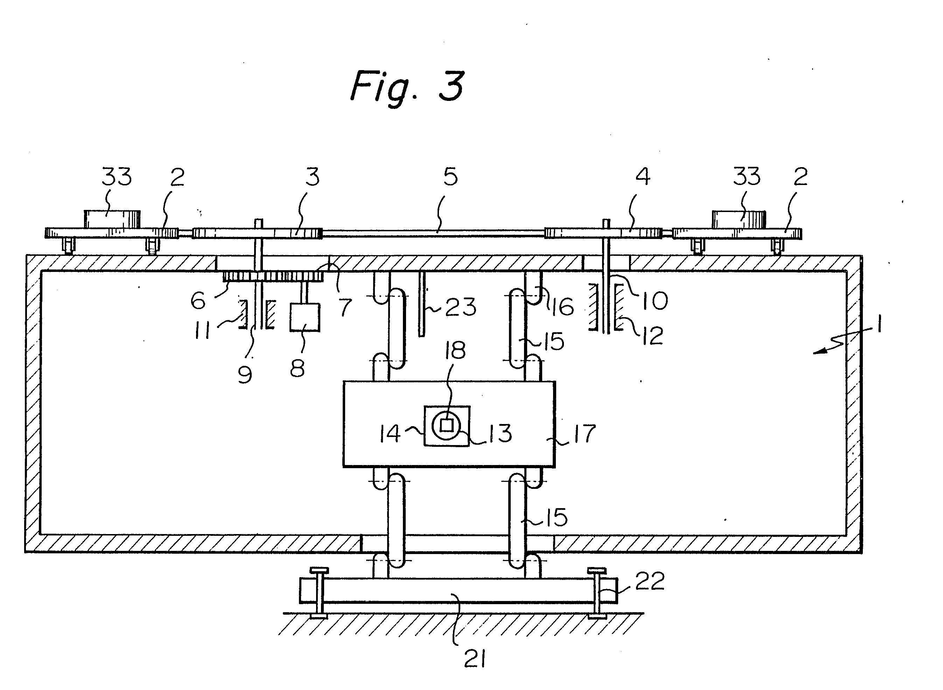

Fig. 3 is a front view of Fig. 1; and

Fig. 4 is an enlarged front view illustrating an alternative embodiment of a scale for reading the height position of the workpiece loading apparatus.

DETAILED DESCRIPTION OF THE INVENTION

Reference numeral 1 denotes a support frame of a workpiece loading apparatus. On the top surface of the support frame 1, there are mounted two sprocket wheels 3 and 4 spaced from each other at a predetermined distance. An endless conveyor chain 5 with a plurality of pallets (2, 2 ...) for loading workpieces thereon is stretched around said two sprocket wheels 3 and 4.

Reference numeral 6 is a gear firmly secured to a shaft 9 of the sprocket wheel 3 and meshed with a gear 7. The gear 7 is, in turn, firmly secured to a driving shaft of a motor 8. Reference numeral 10 is a shaft of the sprocket wheel 4. Said shafts 9 and 10 are rotatably received in bearings 11 and 12, respectively. Thus, the driving force of the motor 8 is transmitted through the gear 7 and 6 to the sprocket wheel 3 and moves endless conveyor chain 5 so as to displace the pallets 2 with a workpiece 33 toward the desired position on the support frame 1.

A leading shaft 13 is rotatably supported on the support frame 1. The right and left portions of the shaft are helically threaded in opposite directions. Said helical threads are engaged with nuts 14,14. The right-hand and left-hand nuts 14,14 are fixed in nut-carriers 17,17, respectively. The nut-carriers 17,17 are connected to an upper fixture 16 through upper links 15,15 and are also connected to a lower fixture 16' through lower links 15,15. The upper fixture 16 is firmly secured to the support frame 1. On the other hand, the lower fixture 16' is firmly secured to a base plate 21 anchored to the floor by means of bolts 22.

On one end of the leading shaft 13, a square head portion 18, intended to fit into a square hole portion 20 of a handle 19, may be formed. Accordingly, by manually turning the handle 19 fitted to the leading shaft 13 in the desired direction, the right-hand and left-hand nuts 14,14 can be shifted along the leading shaft 13 to be brought closer or made more remote from each other. The above motion is transmitted to the support frame 1 through the links 15,15..., thus, the entire support frame 1 can easily be raised or lowered.

Reference numeral 23 denotes a scale indicating the position of the support frame in the vertical direction.

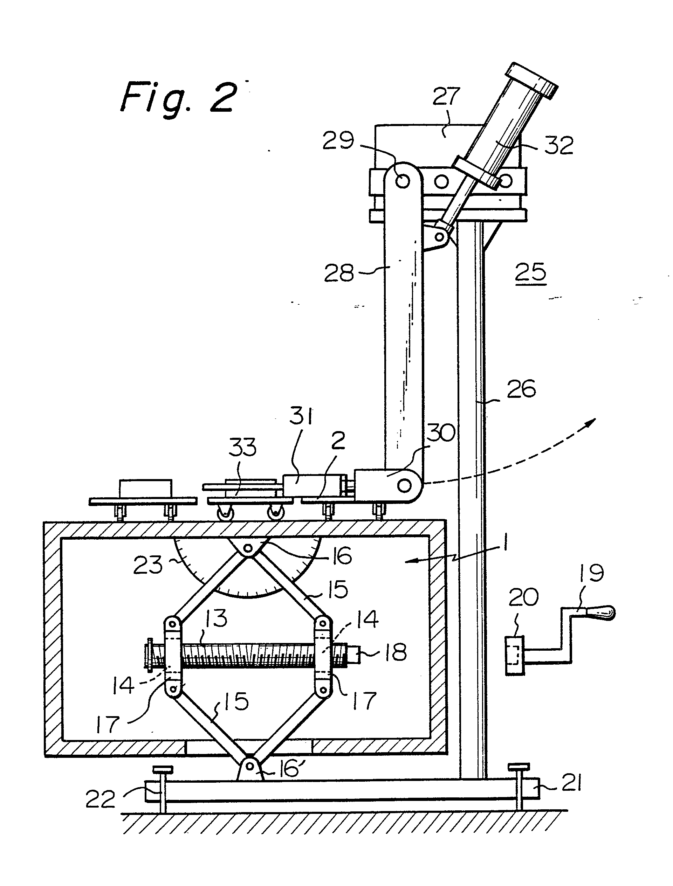

In the first embodiment shown in Fig. 2, said scale 23 is made in the form of a semicircle marked with angular degrees and is firmly secured to the support frame 1. This scale 23 facilitates the adjustment of the height position of the support frame 1 by reading the change of the incident angle formed by the upper links 15,15.

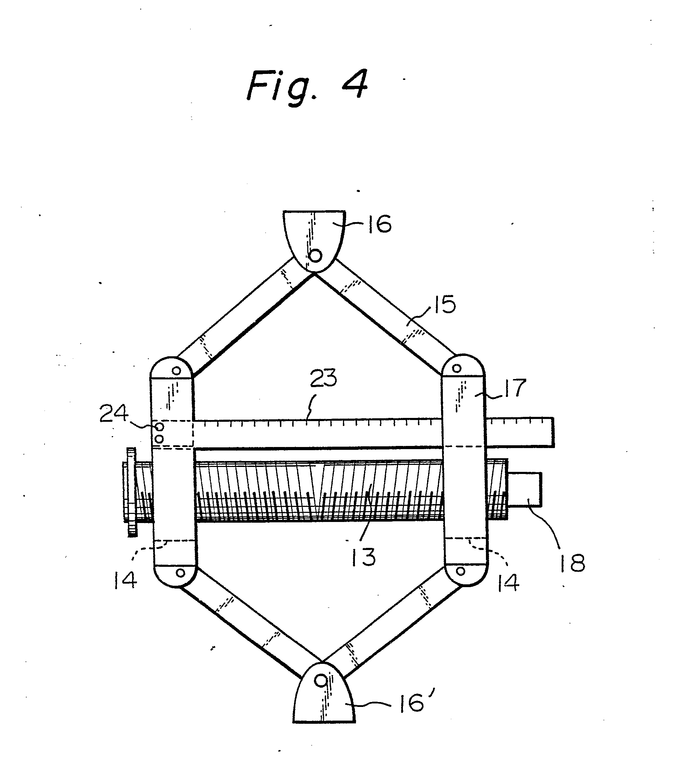

In the second embodiment shown in Fig. 4, said scale 23 is made in the form of a ruler secured to one of the nut-carriers 17,17 by means of, for example, pins 24. This scale 23 facilitates the adjustment of the height position of the support frame 1 by reading the change of the distance between the nut-carriers 17,17.

Reference numerals 25, 26, 27, 28, 29, 30 31 and 32 denote an industrial robot, a stand which is integrated with the base plate 21 and is extended in the vertical direction, a robot body fixed on the stand 20, an arm, an axis of rotation of the arm 28, a wrist, a hand with a workpiece gripper, and an air-cylinder which activates the arm 28, respectively. The arm 28 of the robot 25 can be moved in the direction perpendicular to the plane of Fig. 2 by means of an air-cylinder (not shown) and can be swung around the axis 29 by means of another air-cylinder 32.

The robot 25 is constructed in such a way that, at one extremity of the swing of the arm 28, the hand 31 is at a horizontal position and can grip the workpiece 33 placed on the pallet 2 coming into the workpiece loading region. At the other extremity of the swing of the arm 28, the hand 31 can be rotated by wrist mechanism 30 so that the axis of the workpiece gripper of the hand 31 is aligned with the main spindle of the machine tool.

As will readily be understood from the foregoing description, according to the present invention, the positic of the entire support frame 1 supporting the pallet 2, i.e., the entire workpiece loading apparatus, may be manually adjusted to any desired height. Therefore, when the apparatus of the present invention is utilized in combination with an industrial robot not able to effect vertical linear motion along the vertical axis, the workpiece may be gripped at any desired height position regardless of the workpiece size. As a result, it prevents hindrance of the operation of said industrial robot. The present invention is simple in operation and simple in construction, therefore is low in manufacturing cost.

## CLAIMS

1. A workpiece loading apparatus for an industrial robot having a workpiece gripper not able to effect vertical linear motion along the vertical axis, characterized in that the entire said workpiece loading apparatus can be manually raised and lowered and in that it is provided with a means for adjusting the height position thereof.

2. A workpiece loading apparatus according to claim 1, wherein a scale for reading said height position is secured to said workpiece loading apparatus.

3. A workpiece loading apparatus according to claim 1, wherein a scale for reading said height position is secured to said means for adjusting the height position of said apparatus.

0068685

*Fig. I*

Fig. 2

0068685

*Fig. 3*

Fig. 4

European Patent
Office

**EUROPEAN SEARCH REPORT**

0068685
Application number

EP  82 30 3016

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-B-1 125 350   (HEYLIGENSTAEDT) | 1 | B 23 Q    7/04<br>B 23 Q    7/14 |
| | --- | | |
| A | DE-A-2 444 124   (INDEX) | | |
| | ----- | | |

| TECHNICAL FIELDS SEARCHED (Int. Cl. 3) |
|---|
| B 23 Q    7/00<br>B 23 F    23/00<br>B 65 G    1/00 |

The present search report has been drawn up for all claims

| Place of search | Date of completion of the search | Examiner |
|---|---|---|
| THE HAGUE | 11-10-1982 | DE GUSSEM J.L. |